(19) Europäisches Patentamt

European Patent Office

Office européen des brevets

(11) **EP 0 901 092 B1**

(12) **EUROPEAN PATENT SPECIFICATION**

(45) Date of publication and mention
of the grant of the patent:
**30.11.2005 Bulletin 2005/48**

(51) Int Cl.[7]: **G06K 7/08**

(21) Application number: **98116800.8**

(22) Date of filing: **04.09.1998**

(54) **Card reader**

Kartenleser

Lecteur de cartes

(84) Designated Contracting States:
**DE ES**

(30) Priority: **05.09.1997 JP 24069697**

(43) Date of publication of application:
**10.03.1999 Bulletin 1999/10**

(73) Proprietor: **MATSUSHITA ELECTRIC INDUSTRIAL CO., LTD.**
**Kadoma-shi, Osaka 571-8501 (JP)**

(72) Inventors:
• **Iwamura, Takahiro**
**Kawanishi-shi, Hyogo, 666-0142 (JP)**
• **Onodera, Hiromi**
**Ikoma-shi, Nara, 630-0121 (JP)**
• **Oki, Haijime**
**Kobe-shi, Hyogo, 655-0851 (JP)**

(74) Representative: **Grünecker, Kinkeldey, Stockmair & Schwanhäusser Anwaltssozietät**
**Maximilianstrasse 58**
**80538 München (DE)**

(56) References cited:
**EP-A- 0 613 100          EP-A- 0 779 599**
**US-A- 4 879 609          US-A- 5 053 893**
**US-A- 5 499 150**

• PATENT ABSTRACTS OF JAPAN vol. 015, no. 047 (P-1162), 5 February 1991 (1991-02-05) & JP 02 281403 A (TOHO GAS CO LTD;OTHERS: 01), 19 November 1990 (1990-11-19)
• PATENT ABSTRACTS OF JAPAN vol. 012, no. 480 (P-801), 15 December 1988 (1988-12-15) -& JP 63 197004 A (CSK CORP), 15 August 1988 (1988-08-15)
• PATENT ABSTRACTS OF JAPAN vol. 1998, no. 04, 31 March 1998 (1998-03-31) & JP 09 326017 A (SANKYO SEIKI MFG CO LTD), 16 December 1997 (1997-12-16)

**Description**

BACKGROUND OF THE INVENTION

The present invention relates to a card reader for reading and erasing the data written on a magnetic stripe of a magnetic card.

Data on a magnetic stripe of a magnetic card has been recorded in accordance with a certain format specified by a system in which the card is used. Usually, an ID number for identifying the card or holder of the card, validity date, the highest amount available and such other monetary information are written in a certain specific region of the data format.

When a card is inserted in a card reader, the card reader reads data written in the card to be transmitted to a computer of the system. If the system is under an on-the-line control of the computer, data of the card is immediately analyzed and the ID number and other written contents are compared to make sure the card is theft-related or not, or the card is a one that has been issued through a due procedure or a one that has not been duly issued. In case the card is a pre-paid card or other cards having such other functions, the system confirms whether or not the card is a card that has once been used for an entire amount.

For such cases as described above, it has been requested to have a system that immediately nullifies such cards to be unusable. If it is a once card, among others, there has been a strong request to void the card unconditionally after it is used once. The present invention addresses such requests from the industry. A card reader in accordance with the present invention not only reads and confirms data recorded in a magnetic stripe, but it also has a function to destroy or erase a card, which could otherwise be put on an unjustifiable use. The card reader may be fabricated at an inexpensive cost, but it performs the above-described functions in a simple and easy manner.

Conventional means for erasing the data recorded in a magnetic stripe of a card, includes the use of a card reader equipped with both a recording magnetic head and a reading magnetic head, and the use of a card reader equipped with a combination type magnetic head consisted of a recording core and a reading core; thereby writing any new data on top of an already-written data by supplying an electric current to the recording coil.

Other means to destroy an already-written data is using a card reader equipped with an ordinary reading magnetic head core whose width is narrower than that of recording track, thereby writing any new data over a part of an already-written data by supplying an alternating current to coil of the reading head. This takes advantage of a fact that the basic structure of magnetic heads for recording and reading remain identical (The Japanese Patent Publication No.2-281403).

There is also such other means, in which a card reader equipped with a reading magnetic head having a reading core whose width is identical to that of recording track is used to write any new data over an already-written data by supplying an electric current to coil of the playback magnetic head (The Japanese Utility Model Publication No.3-2402).

However, the card reader/writers equipped with both a magnetic head for recording and a magnetic head for reading, or the card reader/writers equipped with a combination type magnetic head having a recording core and a reading core have a problem with them that their overall dimensions are large and the cost goes substantially high.

In a case where a card reader equipped with an ordinary reading magnetic head, the width of which reading core is narrower than that of recording track, is employed previous data written in the magnetic stripe remains un-erased in a belt shape for a width equal to approximately 2/3 the magnetic stripe; because width of the reading core in the ordinary reading heads is approximately 1/3 that the recording track. Therefore, the previous data can easily be read out.

In a case where a card reader equipped with a reading magnetic head having a reading core of equivalent width as the recording track is used, the previous data may be completely erased because the over-writing of data is conducted by the reading core that has a width identical to that of recording track. However, this method is easily affected by an azimuth loss caused by a matching error in the azimuth (angle) between the gap of the core of magnetic head and the magnetic flux transition section recorded in the magnetic stripe of a card; such a drawback results from the use of the reading magnetic head having a reading core of broader width as compared with that of an ordinary reading magnetic head. Regarding a card on which data have written for a number of times repeatedly in the magnetic stripe with a plurality of card reader/writers, part of previous data remain un-erased at the edge of the latest recording track as a result of subtle relative dislocation in the writing position of data caused by the machine-to-machine difference among the card reader/writers. When reading such a card, a peak shift is created in a reproduced wave-form by the interference of magnetic fields generated from the remaining data, making correct reading of data difficult.

SUMMARY

The present invention presents a compact and inexpensive card reader of high read out function, which is provided with an additional function of reliably destroying/erasing the data recorded in a magnetic stripe of a card.

A card reader according to the present invention is set forth in claim 1.

Preferred embodiments of the invention are defined in the dependent claims.

BRIEF DESCRIPTION OF THE DRAWINGS

Fig. 1      shows a state of data on a magnetic stripe of a card, after a stored data is erased or a certain specific data is written in by a card reader in accordance with a first embodiment of the present invention.

Fig. 2      is a cross sectional view showing a structure of a key portion of an invented card reader.

Fig. 3      shows a state of a card, being transferred over a magnetic head in an invented card reader.

Fig. 4      is a drawing used to show how the angle of inclination of a card is calculated in an invented card reader.

Fig. 5      is a block diagram of circuits in an invented card reader.

Fig. 6      is a circuit diagram showing the bias circuit contained in the Fig.5 block diagram.

Fig. 7      is a cross sectional view showing the structure of a key portion of a card reader in accordance with a second embodiment of the present invention.

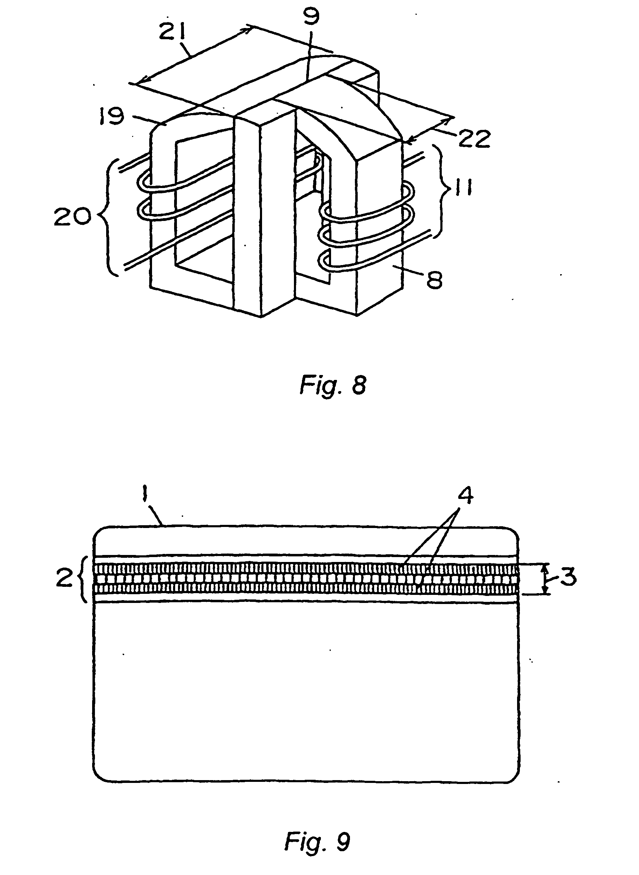

Fig. 8      shows a structure of a conventional combination type magnetic head.

Fig. 9      shows a state of data on a magnetic stripe of a card, after the data is destroyed/erased by a conventional card reader.

DESCRIPTION OF THE PREFERRED EMBODIMENTS

(Embodiment 1)

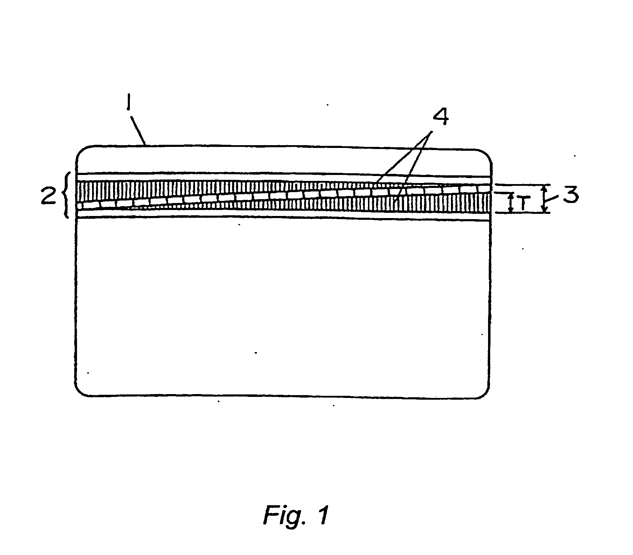

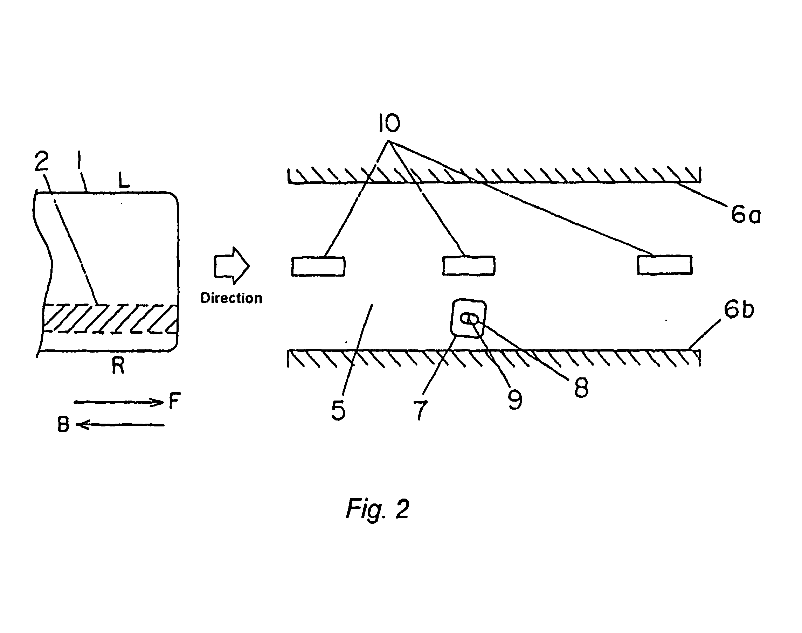

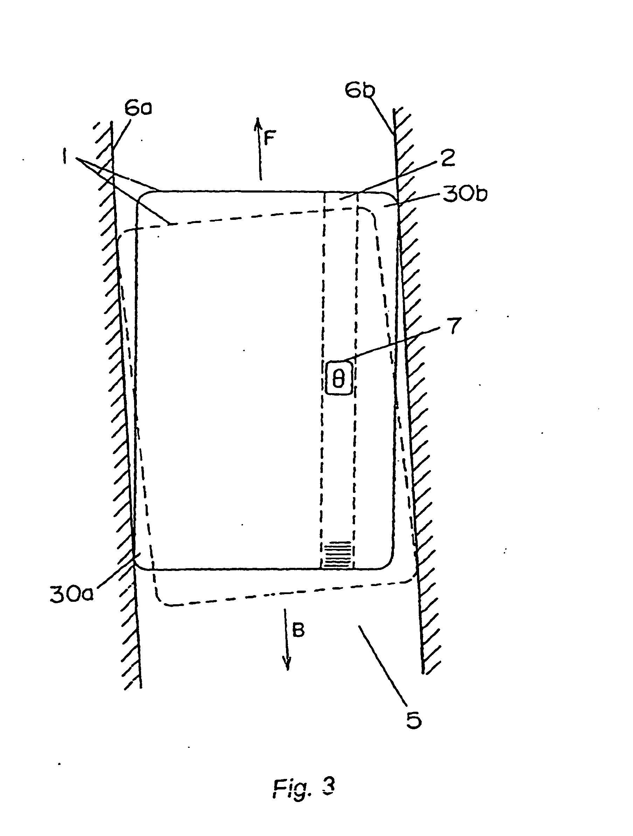

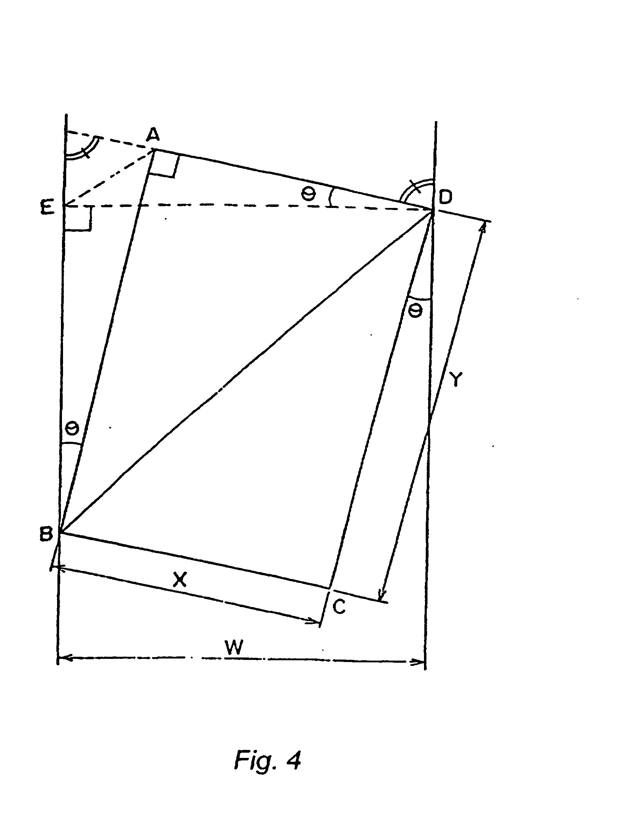

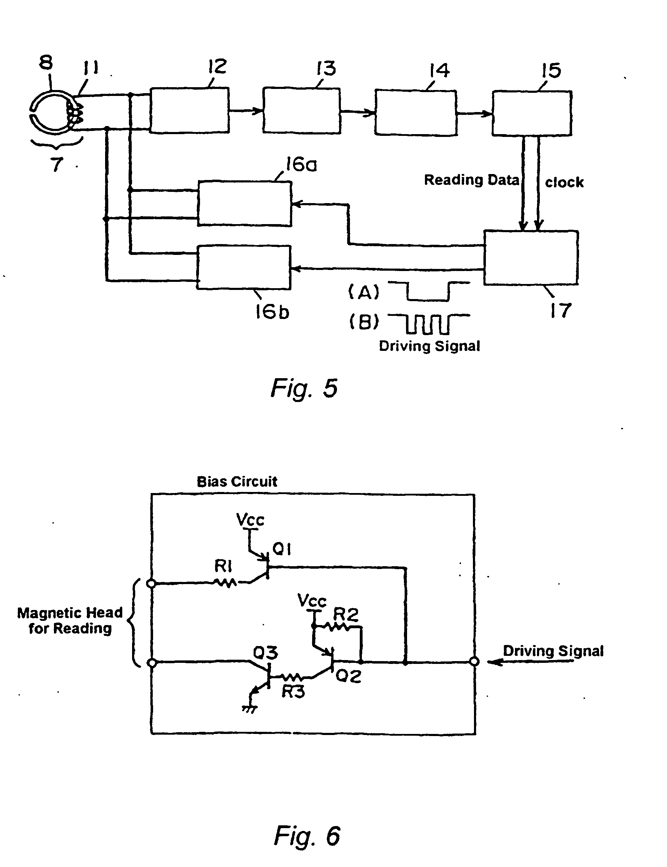

A first exemplary embodiment of the present invention is described in the following. Fig. 1 shows a state of data on a magnetic stripe of a card, after a stored data is erased or a certain specific data is written in by a card reader in accordance with a first embodiment of the present invention. Fig. 2 is a cross sectional view showing a structure of a key portion of a card reader in accordance with a first embodiment of the present invention. Fig.3 shows a state of a card being transferred over a magnetic head in an invented card reader. Fig. 4 is a drawing used to show how the angle of inclination of a card is calculated in an invented card reader. Fig. 5 is a block diagram of circuits in an invented card reader. Fig. 6 is a circuit diagram showing the bias circuit contained in the Fig. 5 block diagram.

In the above drawings, numeral 1 denotes a card, which is transferred in a card path 5 by a transfer roller 10. The width of card path 5 is broader than the length of the narrower side of card 1. Numeral 7 denotes an ordinary reading magnetic head having a reading core 8 whose width is narrower as compared with the width 3 of a recording track, which head is disposed in a position so as a card is provided with a load im-balanced in the right-left relative to a direction of the longer side of a card, at the same time an appropriate azimuth is secured with. The reading magnetic head 7 is wound around with a coil 11 in the reading core 8. When reading out the data, a voltage induced in the coil 11 is amplified by an amplifier 12 to be delivered to a zero-crossing detector 14 via a differentiator, or an integrator, 13. Numeral 15 represents a demodulator, which demodulates a signal delivered from the zero-crossing detector 14 into a read out data and a clock. Numeral 17 is a control unit which is consisted of a central processing unit (CPU), etc. for controlling the whole card reader, including processing of read out data delivered from zero-crossing detector 14, operation of bias circuits 16a, 16b for magnetically exciting the reading magnetic head 7.

Now in the following, outline of the operation is described.

As shown in Fig. 2, card 1 is held between the transfer roller 10 and a pressure roller (not shown) provided to encounter the transfer roller 10, and is transferred for the data read out in the direction F indicated with an arrow symbol. As soon as the card 1 reaches the place of reading magnetic head 7, friction against the reading magnetic head 7 creates a retarding force along a longer side R of the card 1, while a longer side L of the card 1 is kept driven towards the direction F by the transfer force. As a result, the card 1 is driven to take an oblique position as shown in Fig. 3, with two corners 30a, 30b on a diagonal keeping in touch with the left and the right side walls 6a, 6b, respectively, of the card path 5. This state continues until the card 1 passes through the reading magnetic head 7; therefore, the reading magnetic head 7, which is disposed at a certain distance from one side wall 6b of card path 5, proceeds obliquely across the magnetic stripe 2 of card 1.

The angle of inclination of card 1 may be approximated based on a supposition that all the four-corners of the card are right-angled.

Defining the size of the narrower side of card 1 as X, the size of the longer side of card 1 as Y, and the width of card path 5 as W; the length S of a side AE of a triangle ADE and a triangle ABE may be represented using $\theta$ through the cosine theorem (see Fig. 4):

Formula 1 $\quad S^2 = X^2 + W^2 . 2XW\cos\theta$

Formula 2 $\quad S^2 = Y^2 + (X^2 + Y^2 - W^2) - 2Y\sqrt{X^2 + Y^2 - W^2}\cos\theta$

From the two formulae above, $\theta$ becomes as follows

Formula 3 $\quad \theta = \cos^{-1}\dfrac{W^2 - Y^2}{XW - Y\sqrt{X^2 + Y^2 - W^2}}$

In a case where the azimuth of magnetic flux transition section recorded on the magnetic stripe 2 of card 1 is not in coincidence with a gap 9 of the core of the reading magnetic head 7, the output of read out is diminished by the azimuth loss, and a read out error arises due to the interference on wave-form. In order to prevent the occurrence of azimuth loss, the gap 9 of the core of reading magnetic head 7 has been made to take an oblique direction as shown in Fig. 2 and Fig. 3. Suppose the magnetic flux transition section of magnetic stripe 2 of a card 1 is located perpendicular to a direction of the longer side of card 1, the azimuth of gap 9 of the core of reading magnetic head 7 may be set to be identical to the angle of inclination of card 1 (approximated as $\theta$). By so doing, a stable read out operation may be expected without being affected by the azimuth loss.

Next, description is made on a case when a card 1 used is found to be a wrongful card or a card that has been used for the entire amounts. In this case, the card 1 is transferred in the direction B indicated with an arrow in Fig. 2. When passing through the reading magnetic head 7, the card 1 receives a force that is reverse to that in the occasion of read out. Therefore, the card 1 is positioned to a state as indicated with dotted lines in Fig. 3.

When, by providing coil of the reading magnetic head 7 with an electric current for magnetic excitation the data stored in card 1 is erased, or a certain specific data is written in the card 1, in a manner it traverses obliquely across the magnetic stripe 2 of card 1. (see Fig. 1)

By erasing the data stored in card 1, or writing a certain specific data in the card, in a manner it traverses obliquely across the magnetic stripe 2 of card 1, the previous data 4 do not remain in the magnetic stripe in a form of a belt shape even if an ordinary reading magnetic head 7 is employed whose reading core is narrower than the width of the recording track 3. As a result, the reading core 8 of reading magnetic head 7 inevitably hits the written-over region of the magnetic stripe wherever place the reading core might be positioned within the width of recording track 3. This makes unable to read the previous data. Therefore, this creates a same effect as the case when the data erasing is conducted with a recording magnetic head whose recording core has a same width as that of the recording track 3.

A crossing distance T for which the position of writing by reading magnetic head 7 traverses obliquely across the magnetic stripe 2 of card 1 is represented in the following formula using $\theta$ :

Formula 4 $\quad T = \tan\theta$

The value T is given, when conducting the writing using the reading core 8 of reading magnetic head 7 in order to cover the full range of the recording track width 3, as illustrated in Fig. 1. Then, the width W of card path 5 may be determined to the satisfaction of the above-mentioned Formula 3 and Formula 4.

Fig. 6 shows a structure of bias circuits 16a, 16b for magnetically exciting the reading magnetic head 7. For exciting the reading magnetic head 7, the control unit 17 shown in Fig. 5 delivers a driving signal of wave-form (A) to turn the bias circuit ON, and an electric current is supplied to coil 11 of reading magnetic head 7 under the regulation by resistivity value of a current restricting resistor R1. Therefore, whether providing a card with a saturated recording or an unsaturated recording against the magnetic coercivity force may be determined by applying different resistivity value to the current restricting resistor R1. While a card is being read, the bias circuits 16a, 16b stay in the OFF state, or in a state equivalent to a state where the bias circuits are separated from the read out circuit; therefore, it does not affect the operation of an amplifier 12.

The playback magnetic head 7 may be excited intermittently by providing the bias circuits 16a, 16b with a pulse driving signal (B) as shown in Fig. 5. By so doing, a turbulence of magnetization is caused on the magnetic stripe 2 of magnetic card 1 at a moment when the electric current flows into and when it makes an instantaneous interruption, and an interference on the wave-form is created at the read out. The above described constitution is simpler than a circuit structure where an alternating current is supplied to the coil 11 of reading magnetic head 7; yet the data may be destroyed/erased without fail.

Further, data stored in the magnetic stripe 2 of card 1 may be declined in the magnetization, with the degree of declined magnetization varying from place to place, by putting the two bias circuits 16a and 16b, each of which circuits delivering different amount of electric current to coil 11 of reading magnetic head, into ON state alternately, ref. Fig. 5. When a card having a magnetic stripe declined in the magnetization by the above described manner is inserted in a card reader for the read out, the reading core 8 of reading magnetic head 7 inevitably steps on both a portion of the declined magnetization and a portion of the non-declined magnetization at a same time. Therefore, data in the portion of declined magnetization appears as a noise overlapped on a read out signal, and a correct read out of data turns out to be difficult. Thus the data may be destroyed/erased without fail.

Although in the present exemplary embodiment a friction between card and magnetic head has been utilized as means for providing a card with a load im-balanced in the right-left relative to a direction of the longer side of the card, a different member other than magnetic head may of course be employed for providing a card with such a load.

(Embodiment 2)

A second exemplary embodiment of the present invention is described in the following.

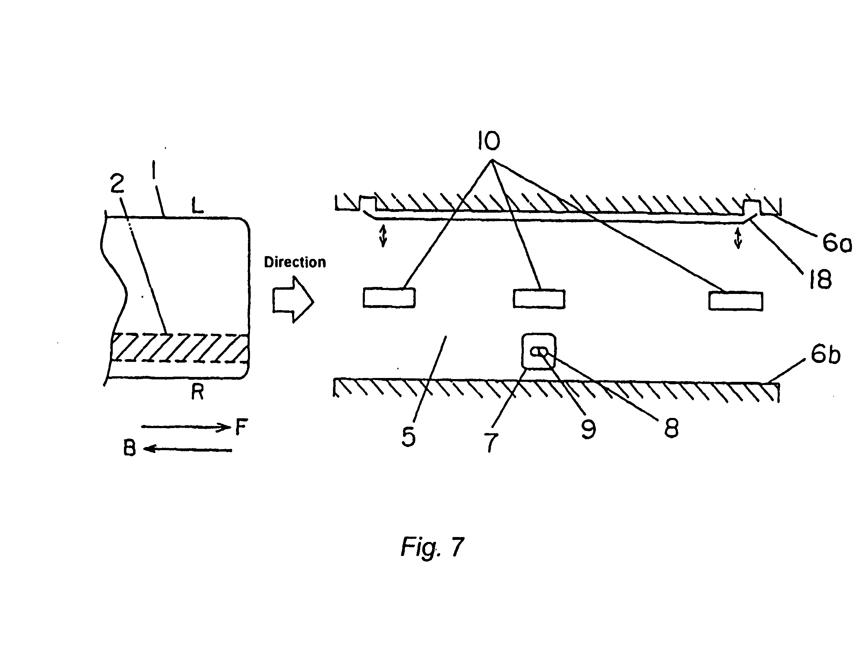

Fig. 7 is a drawing used to describe a key part of a card reader in accordance with a second exemplary embodiment of the present invention.

The point of difference as compared with the first embodiment includes that; the gap 9 of the core of reading magnetic head 7 is not inclined, and a guide plate 18 is provided within the card path 5 for guiding a card 1 to travel keeping contact along a side wall of the card path 5.

During a card reading, the guide plate 18 is put on use to transfer the card with one of its sides keeping contact along a side wall, or the reference plane, in order to suppress the snaking of card during the transportation. By so doing, a highly reliable reading may be carried out with respect to the accuracy in the track position and the azimuth of reading magnetic head 7.

When the card 1 is found out to be a wrongful card or a card whose entire amounts have been totally used, the card reader operates, without putting the guide plate on use, in a same manner as in the first embodiment.

In this way, the card reader performs a stable reading when reading a card, while on the other hand, destructs/erases data with a high reliability.

In each of the above exemplary embodiments, a card 1 has been transferred by means of roller 10. However, it is of course possible to transfer a card 1 by means of a belt.

When the card 1 is found out to be a wrongful card or a card whose contents have been totally used, the destruction/erasing of data stored in the card 1 has been conducted while the card 1 is being transferred in a direction indicated by an arrow B in Fig. 2. The data may of course be destroyed/erased while the card 1 is being transferred in a same direction as in the reading out, indicated with an arrow F.

Data stored in card 1 have been destroyed/erased in a straight line configuration traversing obliquely across the magnetic stripe 2 covering the whole area in terms of the longer side of a card 1. However, if the destruction/erasing is conducted covering the whole area in terms of the width 3 of recording track, the destruction/erasing of data does not necessarily cover the whole area in terms of the longer side of a card 1, but it may be conducted only on a partial basis in terms of the longer side of a card, or the trace of data destruction/erasing may take a snaking configuration.

The bias circuit for magnetically exciting reading magnetic head 7 has been provided for two circuits in the block diagram of Fig. 5; but, it may be constituted of one or any plural counts not less than two.

Although the bias circuit has been provided with an electric current of one single direction in Fig. 6, it may be an alternating current, if one does not mind somewhat more complicated circuit structure in the latter case.

For bringing the bias circuits 16a, 16b to the ON-state intermittently a pulse signal has been supplied from the control unit 17. However, a same effect may be obtained by building an oscillation circuit in the bias circuit to be on/off controlled by the control unit 17.

The timing of changing a driving signal to be supplied from the control unit 17 to bias circuits 16a, 16b may either be synchronized with clock signal of data stored in the card 1, or asynchronous.

As described above, in a first embodiment of the card reader the data recorded in said card is erased or a certain data is written in said card in a manner to cross obliquely across the magnetic stripe of said card. Therefore, the data may be destroyed/erased for an entire region covering the full width of the recording track.

In a second embodiment of the card reader, a card is provided with a load im-balanced in the right-left with respect to a direction of the longer side of a card; as a result, the card is transferred obliquely with its two corners on a diagonal keeping contact with the right and the left side walls respectively of the card path. Therefore, the reading magnetic head proceeds obliquely across the magnetic stripe of said card. Thus the data may be destroyed/erased for an entire region covering the full width of recording track by erasing the data or writing a certain specific data on said card with said reading magnetic head.

In a third embodiment of the card reader, the reading magnetic head is mounted in an oblique positioning so as its gap is in parallel with the magnetic reversal section recorded in said magnetic stripe. Therefore, the data stored in magnetic stripe of a card may be read out correctly without being affected by an output decrement due to azimuth loss or a wave-form interference.

In a fourth embodiment of the card reader, the snaking of card during transportation is suppressed by siding means which is put on operation during the read out for making a card travel along the card path with a side of the card sweeping a side wall of the card path. As a result, the accuracy in terms of track position and azimuth relative to the gap of the core of reading magnetic head is reliably secured, and the data stored in magnetic stripe of said card may be correctly read out. The siding means is kept out of the operation when a card is transferred for erasing the data recorded in said card or writing a certain specific data in said card; therefore, as a result of functioning of the load given on said card the reading magnetic head proceeds obliquely across the magnetic stripe of said card. Thus the data may be destroyed/erased for an entire region covering the full width of the recording track by erasing the data or writing a certain specific data on said card with said reading magnetic head.

In a fifth embodiment of the of the reader, the coil of the reading magnetic head is provided intermittently with an electric current of one single direction when erasing the data or writing a certain specific data in. As a result, a turbulence of magnetization is caused on the magnetic stripe at a moment when the electric current comes into and when it makes an instantaneous interruption, and an interference on the wave-form is created at the read out. Thus the data may be destroyed/erased without fail.

In a sixth embodiment of the card reader, the coil of the reading magnetic head is provided with an unsaturated recording electric current for declining the data in the magnetization stored in the magnetic stripe of a card when erasing the data or writing a certain specific data in. When reading out the data after the declined magnetization, if the reading core completely coincides with the width of track of the declined magnetization the data can not be read out correctly because the output is low; if said reading core is positioned on both a track of the declined magnetization and a remaining track of non-declined magnetization at a same time the data in the track of declined magnetization appears as a noise and is overlapped on a read out signal, rendering correct reading of data difficult. Thus the data may be destroyed/erased without fail.

In a seventh embodiment of the card reader, the coil of the reading magnetic head is provided with an ever-changing electric current whose amplitude is varied at all times when erasing the data or writing a certain specific data in. This creates a number of regions of declined magnetization within the recording track width, yielding a same effect as in the sixth card reader.

**Claims**

1.   A card reader for a card having a magnetic stripe in parallel to the longer side of the card comprising:

a main body (6a, 6b) having a card path and a magnetic head (7) provided in the card path used for reading and erasing of magnetic data stored in the magnetic stripe (2) of the card (1),

the core of the magnetic head being smaller than the width of the magnetic stripe,

**characterised in that,**
the reader being configured such that the magnetic head (7) traverses obliquely across the magnetic stripe on the card for erasure.

2.   Card reader according to daim 1,
**characterised in that**,
for erasure, the magnetic head is provided intermittently with electric current flowing in one single direction.

3.   Card reader according to claim 1,
**charactertised in that,**
for erasure, the magnetic head is provided with a saturated or unsaturated electric current.

4.   Card reader according to claim 1,
**characterised in that,**
for erasure, the magnetic head is provided with an ever-changing electric current whose size is varying at all times.

5.   Card reader according to claim 1,
**characterised in that,**

for erasure of the original data stored in the magnetic stripe, the oblique overwritten data path includes readable new information.

6. Card reader according to claim 1,
   **characterised by**
   transfer means including load means for providing the card with an inclination with respect to the direction of transfer for erasure.

7. Card reader according to claim 6,
   **characterised by**
   siding means (18) to prevent an inclination for reading.

8. Card reader according to any of claims 1 - 7,
   **characterised in that,**
   the magnetic head is mounted obliquely so that the magnetic gap (9) is positioned in parallel with the magnetic flux transitional reversal section recorded in the magnetic stripe when the magnetic head traverses obliquely across the magnetic stripe.


**Patentansprüche**

1. Kartenleser für eine Karte mit einem Mag netstreifen parallel zur längeren Seite der Karte, der umfasst:

   einen Hauptkörper (6a, 6b) mit einem Kartenweg und einem Magnetkopf (7), der auf dem Kartenweg vorhanden ist und dazu dient, in dem Magnetstreifen (2) der Karte (1) gespeicherte magnetische Daten zu lesen und zu löschen,

   wobei der Kern des Magnetkopfes kleiner ist als die Breite des Magnetstreifens,
   **dadurch gekennzeichnet, dass**:

   der Leser so konfiguriert ist, dass der Magnetkopf (7) zur Löschung den Magnetstreifen auf der Karte schräg überquert.

2. Kartenleser nach Anspruch 1,
   **dadurch gekennzeichnet, dass**:

   dem Magnetkopf zur Löschung intermittierend elektrischer Strom zugeführt wird, der in einer einzelnen Richtung fließt.

3. Kartenleser nach Anspruch 1,
   **dadurch gekennzeichnet, dass**:

   dem Magnetkopf zur Löschung ein gesättigter oder ungesättigter elektrischer Strom zugeführt wird.

4. Kartenleser nach Anspruch 1,
   **dadurch gekennzeichnet, dass**:

   dem Magnetkopf zur Löschung ein sich ständig ändernder elektrischer Strom zugeführt wird, dessen Stärke sich immer ändert.

5. Kartenleser nach Anspruch 1,
   **dadurch gekennzeichnet, dass**:

   zur Löschung der in dem Magnetstreifen gespeicherten ursprünglichen Daten der schräge überschriebene Datenweg lesbare neue Informationen enthält.

6. Kartenleser nach Anspruch 1,
   **gekennzeichnet durch**:

eine Überführungseinrichtung, die eine Belastungseinrichtung enthält, um der Karte eine Neigung in Bezug auf die Richtung der Überführung zur Löschung zu verleihen.

**7.** Kartenleser nach Anspruch 6,
**gekennzeichnet durch**:

eine Führungseinrichtung (18), die eine Neigung zum Lesen verhindert.

**8.** Kartenleser nach einem der Ansprüche 1 - 7,
**dadurch gekennzeichnet, dass**:

der Magnetkopf schräg angebracht ist, so dass der Magnetspalt (9) parallel zu dem Magnetfluss-Übergangsumkehrabschnitt angeordnet ist, der in dem Magnetstreifen aufgezeichnet wird, wenn der Magnetkopf den Magnetstreifen schräg überquert.

**Revendications**

**1.** Lecteur de carte pour une carte ayant une bande magnétique en parallèle au côté le plus long de la carte comprenant :

un corps principal (6a, 6b) ayant un trajet de carte et une tête magnétique (7) disposée dans le trajet de carte utilisé pour lire et effacer des données magnétiques mémorisées dans la bande magnétique (2) de la carte (1),

le noyau de la tête magnétique étant plus petit que la largeur de la bande magnétique,

**caractérisé en ce que**
le lecteur est configuré de sorte que la tête magnétique (7) se déplace à l'oblique à travers la bande magnétique sur la carte pour effacer.

**2.** Lecteur de carte selon la revendication 1,
**caractérisé en ce que**,
pour l'effacement, la tête magnétique reçoit de manière intermittente un courant électrique circulant dans une seule direction.

**3.** Lecteur de carte selon la revendication 1,
**caractérisé en ce que**
pour l'effacement, la tête magnétique reçoit un courant électrique saturé ou non saturé.

**4.** Lecteur de carte selon la revendication 1,
**caractérisé en ce que**
pour l'effacement, la tête magnétique reçoit un courant électrique changeant de manière régulière dont l'intensité varie à tout instant.

**5.** Lecteur de carte selon la revendication 1,
**caractérisé en ce que**
pour l'effacement des données d'origine mémorisées dans la bande magnétique, le trajet des données réécrites oblique inclut de nouvelles informations lisibles.

**6.** Lecteur de carte selon la revendication 1,
**caractérisé par**
un moyen de transfert incluant un moyen de charge pour procurer à la carte une inclinaison par rapport à la direction du transfert pour l'effacement.

**7.** Lecteur de carte selon la revendication 6,
**caractérisé par**
un moyen d'évitement (18) pour empêcher une inclinaison pour la lecture.

**8.** Lecteur de carte selon l'une quelconque des revendications 1 à 7,
**caractérisé en ce que**
la tête magnétique est montée de manière oblique de sorte que l'entrefer magnétique (9) est positionné parallèle à la section d'inversion de transition de flux magnétique enregistrée dans la bande magnétique lorsque la tête magnétique se déplace à l'oblique à travers la bande magnétique.

Fig. 1

Fig. 2

Fig. 3

Fig. 4

**Fig. 5**

**Fig. 6**

Fig. 7

EP 0 901 092 B1

Fig. 8

Fig. 9